# EUROPEAN PATENT APPLICATION

(11) **EP 2 320 361 A1**
(43) Date of publication of application: **11.05.2011**
(21) Application number: 09172850.1
(22) Date of filing: 13.10.2009
(51) Int. Cl.: G06Q 10/00

(54) **Reverse engineering of a production request in a MES environment**

(71) Applicant: SIEMENS AKTIENGESELLSCHAFT, 80333 München (DE)
(72) Inventor: Copello, Paolo, 16035 Rapallo (IT); Raviola, Alessandro, 16156 Genova (IT)
(74) Representative: Fischer, Michael

(57) **Abstract**

The present invention discloses a method and a system for automatically generating a product production rule (5) from a production request (1), the system comprising:
- a reading module (2) capable of reading production request data;
- a data filter module (3) designed for selecting a set of data from the production request data;
- a treatment module (4) designed for generating the product production rule;
- means for storing the product production rule.

## Description

The present invention relates generally to production requests in a Manufacturing Executing System (MES) environment and more specifically to a method and a system for reverse engineering of a production request.

A production request is a request for producing an object, for example, a request for producing a car. This request is usually associated to different production phases and working steps. Depending on the market segment, each of these production phases may also comprise undergoing production phases, i.e. each production phase may repeatedly reveals at least one undergoing production phase in a Russian doll way. Each of these production phases is associated to the production of at least one part or piece of said object. If we keep the example of the car, the production phases, and also its undergoing production phases, correspond to the production of pieces of the car, like motor, main body, etc. The working steps correspond then to the assembly of said pieces. Each car production operation involves moreover tools, equipment, personnel, in other words, resources that intervene in a defined manner, according for example to a temporal planning or to an evolution of the production phases, and that cooperate for the effective realization of the final object, i.e. the car in our example.

The set of operations that have to be realized for the production of the requested object, like the whole production phases and working steps, are described in rules called product production rules (PPR). Thus, the PPR define the set of operations that are necessary for achieving the production request according to a knowledge of usable resources. Thus, these operations include materials, personnel, equipments, etc, that are dedicated to each production phase and working steps. For example, in the case of the production of a car, the PPR define which resources will be engaged for placing a motor in the main body of a car, i.e. which tools will be used, which personal manage it and is responsible for it, and when this operation takes place in the production process from a chronological point of view, i.e. according to an organization of the working steps and production phases. In other words, the PPR are the recipe for producing a requested object. They are instructions for making the requested object in a way that satisfies the production request.

When a new product or object is developed, a usual way for producing said new object starts with the creation of PPR, followed, then, by the creation, from these PPR, of a production request. Before reaching an ideal production request that reflects entirely the customer or market requirements, the PPR might be submitted to one or several refinements according to the customer wishes. The PPR is thus translated in a customer order, i.e. said production request, that might have the particularity to be executable by a MES. For example, when a process controller, in particular comprised in the MES, executes guidelines or instructions given in the PPR, the resulting object of the production satisfies the customer criteria. Usually speaking, the MES is an intermediate layer providing computing machines and software tools between an Enterprise Resource Planning (ERP) upper layer and a process line lower layer, including generally software tools for analysis management and software tools for productive process. The MES is based on the ISA (International Standard Association) standard S95 which defines how software tools may implement the productive process at plant floor level and how to communicate with it.

Each production request is specific to one product, i.e. an object satisfying the customer criteria. Moreover, a production request is the result of an integration of several and often mixed data sources involved in the production of a requested object. Effectively, the PPR, that define and plan from a chronological point of view the production phases and working steps, are linked to data sources of various origins, which represent for example the resources used for the production of said object. It might be for example external or internal data sources that are provided by a customer, by ERP system, etc. The data are usually appropriately worked out in order to become integrable to at least one production request within the MES. The PPR are based on said data sources, and use said data sources for the creation/generation of a production request. Consequently, a production request is defined by a specific set of data resulting from an integration of at least a part of said data sources and is generally stored in a database modeling the production request. If the production request changes, the set of data involved in the production of the requested object also changes. Then, the MES associated to a specific plant is responsible for the execution of the production request generated by the PPR, i.e. for the production of the object associated to a product request.

PPR are very important in a factory, because they represent a model for generating the production request, said model being free of any temporal deadlines associated to the production request, and being open to modifications for generating new production requests. Effectively, PPR are the theoretical instructions for a concrete production management associated to a production request. In order to execute a new production request, factory designer have to work on the PPR, and adapt it to new customer criteria associated to said new production request, and thus, to create new specific instructions. In particular, if the new production request is for example an evolution of a previously requested, and thus existing, object, the new instructions are only an adaptation of previously used instructions. Moreover, new products often start as an evolution of existing products already in the market. In this case, the evolution of the existing product requests a new PPR for generating and creating a new production request associated to the production of said new product.

One problem arises in reverse engineering of a production request, i.e. when one wants to abstract an existing production request into a PPR in order to be able to manipulate said PPR, for example for adapting said PPR to new requirements of a customer or market that are consistent with an evolution of an existing product. This case of reverse engineering starts from a known production request that was previously generated with unknown PPR, and aims to determine said unknown PPR that allow the creation of the existing production request. In other words, reverse engineering corresponds in finding the instructions, i.e. the PPR, associated to a known production request starting from said known production request.

Until now, when a production request arrives in a factory before any achievement of PPR, the lonely solution for creating rules from the production request is to manually perform an abstraction operation on the production request in order to obtain a model, i.e. the PPR. It often arrives that production requests are not turned on into PPR, which is accompanied with data lost. Moreover, since a production request may comprise hundreds of production phases associated to a complex description of resources like equipment, personnel, materials, process parameters, etc., manually abstracting instructions from a production request is consequently not trivial, and often leads also to time lost, accompanied with delay in the planning of a requested new product production.

It is therefore an objective of the present invention to provide a method and a system for abstracting a production request into a PPR, in particular within a MES and in a manner free of any manual operation related to the abstraction of the production request into the PPR.

This objective is achieved according to the present invention with respect to the method by a method for automatically generating PPR from a production request, the method comprising the steps of:
- reading production request data, in particular said production request data being stored within a MES;
- selecting a dataset from the production request data, in particular by means of a filtering process of said production request data, the dataset being in particular a specific selection of the production request data according for example to filtering criteria that are satisfied;
- sorting and working out the data of the dataset for generating at least one PPR, in particular by abstracting the data of the dataset;
- storing the generated PPR, in particular in a database.

This objective is achieved according to the present invention with respect to the system by a system for automatically generating PPR from a production request, the system comprising:
- a reading module capable of reading production request data, in particular capable of reading said production request data in a MES;
- a data filter module designed for selecting a set of data, or dataset, from the production request data, according for example to a filtering process;
- a treatment module designed for generating the PPR, in particular by abstracting the data of the dataset;
- means for storing the PPR, in particular, in a database.

In particular, the production request data are data coming from at least one data source and that are integrated to the production request.

In particular, the data filter module comprises at least one filtering protocol designed for allowing a selection of specific production request data that are needed for generating the PPR, the selection being done according to filtering criteria. Thus, the filtering process is in particular designed for working with at least one filtering protocol. Moreover, at least one filtering protocol is configurable by means for configuring said filtering protocol, said means for configuring being advantageously comprised in the data filter module. The configuration of the filtering protocols might be done manually by a user, for example by changing at least one filtering criterion, or automatically, in particular within a MES, and in function of the type of object of the production request. Filtering the production request data results in said dataset, i.e. it results in a specific selection of said production request data that satisfies the filtering criteria.

The dataset, or in other words, the selection of specific production request data, comprises in particular only timeless information related to the production request. Effectively, while the production request may comprise data related to production deadlines, like the start of the production, said selection comprises only timeless data, for example data related to resources like material and equipment used for producing a requested object, but no information related to an estimated start time of the production of the requested object. Thus, the filtering process is able to automatically select at least one set of production request data solely related to production resources.

After filtering the production request data, the data comprised in the dataset are sorted and worked out, in particular by the treatment module, in order to generate the PPR. According to a preferred embodiment, the treatment module is capable of abstracting instructions and theoretical data from the data of the dataset. In particular, the expression "abstracting" means to withdraw data from their context, said context being associated for example to the production of a specific requested object, so that data or instructions resulting from the abstracting process realized by the treatment module are free of any contextual information, i.e. are independent of a specific production request, and only comprise essential information for realizing said requested object. Then, said data or instructions obtained after the abstracting process might be re-contextualized for each new specific production request, for example, by being adapted to the requirements of a customer/market.

### Brief description of the drawings

- Figure 1: schematically represents an example of a standard product lifecycle;
- Figure 2: schematically represents an example of a real product lifecycle;
- Figure 3: schematically represents an example of Reverse engineering of product request in MES environment

### Detailed description

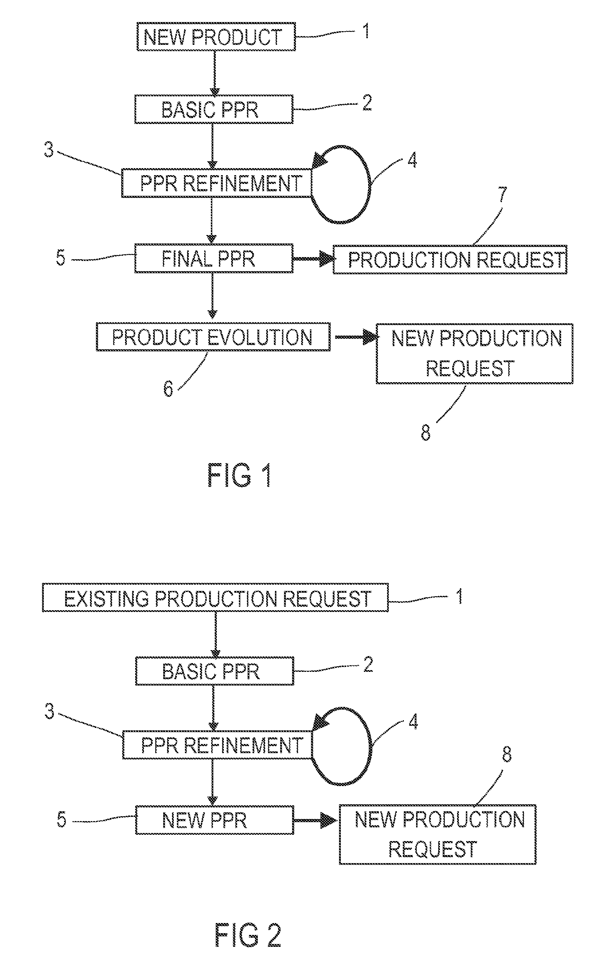

Figure 1 schematically represents an example of a standard product lifecycle, according to a series of successive steps:
- market or customer requirements identifying a new product 1;
- generation of a basic PPR 2 to produce the new product;
- PPR refinements 3, i.e. subsequent refinements 4 of the basic PPR to obtain a final PPR 5 that is able to generate a production request 7 to produce the new product according to the market or customer requirements;

- subsequent refinements of the final PPR to adapt said final PPR to a product evolution 6, and thus, to obtain a new or similar PPR satisfying the requirements of the market or customer according to the evolution of the new product 1 and the creation of a new production request 8.

Figure 2 schematically represents an example of a real product lifecycle, according to a series of successive steps:
- already existing product associated to an existing production request 1 according to requirements of a market or customers;
- manual generation of a basic PPR 2 representing an abstraction of the existing product;
- PPR refinements 3, i.e. subsequent refinements 4 of the basic PPR to obtain a new or similar PPR 5 for generating a new product associated to a new production request 8 satisfying the requirements of the customer or market.

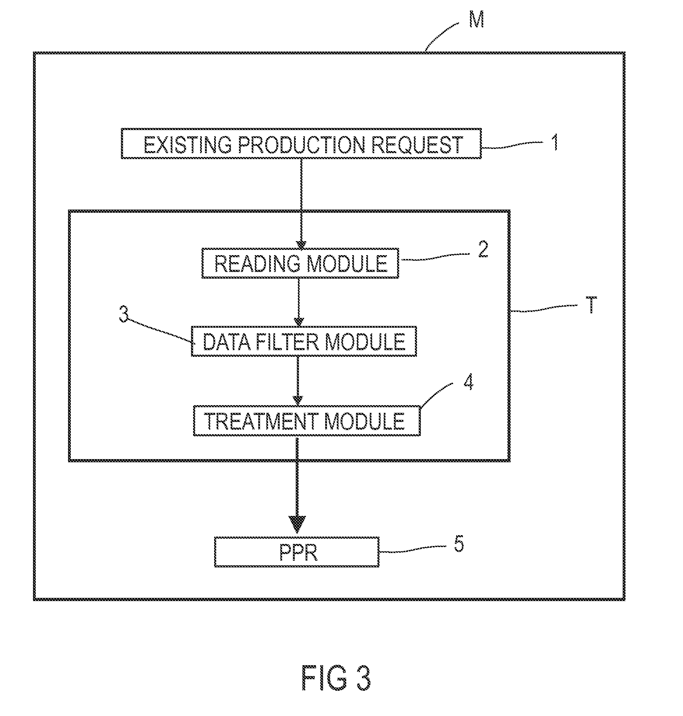

According to Figure 2, new PPR have to be generated by hand starting from a known product that already exists in the market, but unknown PPR. The manual generation of a basic PPR is time consuming and is often associated with economical lost. To avoid these problems, Figure 3 schematically proposes an embodiment of the invention that allows the reverse engineering of a production request, in particular within a MES.
In Figure 3, a reading module 2 is able to read production request data that are for example embedded or integrated to an existing production request 1 and stored in particular in a MES M. Then a data filter module 3 is able to select among the production request data, a dataset comprising data that satisfy filtering criteria defined by at least one filtering protocol comprised in the data filter module. These filtering criteria allow for example to only select timeless data, or data related to resources like material or equipment, or data related to production phases, etc., while other kind of data are for example ignored. Once the selection of data satisfying the filtering criteria is done, then a treatment module 4 is able to generate at least one PPR 5, in particular by abstracting the data of the dataset. For example, the treatment module may in particular recognize production phases, working steps and resources (materials, equipments, ...) involved in the production request data, and withdraw them from their context that was specific to the existing product and thus, to the existing production request. The PPR 5 generated by the treatment module 4 might be in particular automatically stored in the MES M for future refinements according to an evolution of the product or customer/market requirements.

Finally, the reading module 2, the filter data module 3 and the treatment module 4 might be incorporated in a single reverse engineering tool T, in particular design for cooperating with a MES M.

Finally, the method and the system according to the invention have the following advantages:
- the cooperation of the reading module 2, the data filter module 3 and the treatment module 4, allows to automatically generate PPR from an existing production request 1;
- the automatic generation of PPR advantageously allows time and cost savings.

## Claims

1. Method for automatically generating a product production rule (5) from a production request (1), the method comprising the steps of:
- reading production request data;
- selecting a dataset from the production request data;
- sorting and working out the data of said dataset for generating at least one product production rule;
- storing the generated product production rule.

2. Method according to claim 1, wherein the step of selecting the dataset comprises a filtering process.

3. Method according to claim 2, wherein the filtering process is designed for working with at least one filtering protocol.

4. Method according to claim 3, wherein the filtering protocol is configurable.

5. Method according to one of the claims 2 to 4, wherein the filtering process is able to automatically select at least one set of production request data solely related to production resources.

6. Method according to one of the preceding claims, **characterized by** abstracting the data of the dataset.

7. System for automatically generating product production rule (5) from a production request (1), the system comprising:
- a reading module (2) capable of reading production request data;
- a data filter module (3) designed for selecting a set of data from the production request data;
- a treatment module (4) designed for generating the product production rule;
- means for storing the product production rule.

8. System according to claim 7, **characterized in that** the data filter module (3) comprises at least one filtering protocol.

9. System according to claim 8, wherein the filtering protocol is configurable.

10. System according to one of the claims 7 to 8, wherein the treatment module (4) is able to generate at least one product production rule by abstracting the data of the data set.
